# FASCICULE DE BREVET EUROPEEN

(11) **EP 3 828 478 B1**
(45) Date de publication et mention de la délivrance du brevet: **07.05.2025**
(21) Numéro de dépôt: 20207522.2
(22) Date de dépôt: 13.11.2020
(51) Int. Cl.: F24S 23/74, F24S 23/70

(54) **RÉFLECTEUR SOLAIRE COMPORTANT DES MIROIRS AVEC DES RAYONS DE COURBURE DIFFÉRENTS**
SOLARREFLEKTOR, DER SPIEGEL MIT UNTERSCHIEDLICHEN KRÜMMUNGSRADIEN UMFASST
SOLAR REFLECTOR COMPRISING MIRRORS WITH RAYS OF DIFFERENT CURVATURE

(30) Priorité: 28.11.2019 FR 1913409
(43) Date de publication de la demande: 02.06.2021
(73) Titulaire: Commissariat à l'Energie Atomique et aux Energies Alternatives, 75015 Paris (FR)
(72) Inventeur: VIDAL, Frédéric, 38054 GRENOBLE CEDEX 09 (FR); ALBERT, Raphaël, 38054 GRENOBLE CEDEX 09 (FR)
(74) Mandataire: Brevalex

(56) Documents cités:
- EP-A1- 2 561 287
- EP-B1- 2 561 287
- WO-A1-2017/059484
- WO-A2-2014/004882
- DE-A1- 102013 225 457
- FR-A1- 3 030 023
- US-A- 4 067 319
- US-A- 4 602 853

## Description

### DOMAINE TECHNIQUE

La présente invention se rapporte au domaine général des centrales (ou installations) solaires, et plus spécifiquement à la conception d'un nouveau type de réflecteur solaire présent dans de telles centrales.

De façon privilégiée, l'invention s'applique au domaine du solaire thermique à concentration (ou encore domaine du « CSP » pour « Concentrated Solar Power » anglais), et plus précisément encore au domaine des systèmes solaires à concentration avec récepteurs fixes tels que les centrales à tour et les collecteurs linéaires de Fresnel.

L'invention propose ainsi un réflecteur solaire comportant des miroirs avec des rayons de courbure différents, ainsi qu'une centrale solaire comportant un tel réflecteur solaire.

### ÉTAT DE LA TECHNIQUE ANTÉRIEURE

Dans le domaine de l'énergie solaire, il existe des champs de réflecteurs solaires de différentes natures. Ceux-ci sont utilisés pour concentrer le rayonnement solaire sur des capteurs de haut flux, de plusieurs dizaines de kilowatts à quelques mégawatts par mètre carré, afin de produire de la chaleur et/ou de l'électricité.

Ainsi, parmi les technologies connues de la filière du solaire thermodynamique, il existe la technologie du solaire thermique à concentration (CSP) qui utilise des miroirs pour concentrer le rayonnement solaire sur une petite surface. La technologie CSP consiste plus précisément à utiliser le rayonnement solaire pour chauffer un fluide caloporteur servant de source chaude dans un cycle thermodynamique. La concentration permet d'atteindre des températures plus ou moins élevées, et ainsi de bénéficier de rendements de conversion thermodynamique plus ou moins importants. Les techniques développées autour de la technologie CSP se distinguent par leur méthode de concentration des rayons solaires, leur méthode de transport, et éventuellement de stockage, de la chaleur, notamment par le biais d'un ou plusieurs fluides caloporteurs, et leur méthode de conversion thermodynamique, par exemple par le biais de turbines à vapeur, de turbines à gaz, de moteurs du type Stirling, entre autres.

On rencontre ainsi typiquement quatre familles de systèmes solaires à concentration appartenant à la technologie CSP, à savoir : les collecteurs cylindro-paraboliques à foyer linéaire, les collecteurs linéaires de Fresnel, les centrales à tour à récepteur central, et les collecteurs paraboliques à foyer mobile.

Les collecteurs cylindro-paraboliques et les collecteurs linéaires de Fresnel constituent des systèmes solaires à concentration linéaire, tandis que les centrales à tour et les collecteurs paraboliques constituent des systèmes solaires à concentration ponctuelle. Par ailleurs, les centrales à tour et les collecteurs linéaires de Fresnel constituent des systèmes solaires à concentration avec récepteurs fixes, tandis que les collecteurs paraboliques et les collecteurs cylindro-paraboliques constituent des systèmes solaires à concentration avec récepteurs mobiles.

Un élément clé de tels systèmes solaires à concentration est le champ de réflecteurs. Par exemple, dans le cas des collecteurs linéaires de Fresnel (technologie CLFR pour « Compact Linear Fresnel Reflector » en anglais), le champ de réflecteurs primaires, en suivant la course du soleil d'est en ouest au cours d'une journée, reçoit les rayons lumineux directs et les réfléchit en direction du récepteur fixe. Le facteur de concentration pour de tels collecteurs linéaires de Fresnel est typiquement de l'ordre de 50, ce qui signifie que le flux solaire au récepteur est égal à environ 50 fois le flux solaire qui impacte le sol.

Dans l'ensemble de ces technologies, les réflecteurs solaires ont pour fonction de réfléchir et de concentrer l'ensemble de l'irradiation solaire directe incidente vers le récepteur, situé à quelques mètres ou quelques dizaines de mètres des réflecteurs. Ils sont composés d'un miroir assemblé à une structure montée sur des systèmes de rotation suivant un ou deux axes permettant de suivre la course du soleil au cours de la journée.

En raison des dimensions de ces champs de réflecteurs solaires, typiquement de plusieurs hectares, et des distances entre réflecteurs solaires et récepteur, on comprend l'importance de la précision optique des systèmes. Plus précisément, il est essentiel que le rayonnement solaire qui est réfléchi par les miroirs impacte le récepteur, sinon ce rayonnement est perdu et cela fait alors chuter le rendement global de la centrale solaire. Cette précision optique passe par plusieurs points indépendants énumérés ci-dessous :
- forme du miroir : la forme du miroir doit permettre de focaliser le rayonnement solaire en un point précis. Tout défaut sur cette forme va se traduire par un défaut sur la focalisation, et donc une perte de rendement. Il est donc critique de maîtriser précisément cette forme ;
- rigidité de la structure : la structure qui supporte le miroir peut se déformer sous l'effet des contraintes externes telles que le poids, le vent, la motorisation qui permet la mise en mouvement du miroir, entre autres ;
- précision de visée : les systèmes de motorisation et d'entraînement peuvent introduire une erreur supplémentaire.

Les précisions nécessaires pour les capteurs actuels sont de l'ordre de 0,1°. A titre d'exemple, ceci représente quelques millimètres de défaut de forme sur des miroirs ayant une taille de l'ordre du mètre carré.

Le premier point évoqué ci-dessus est plus particulièrement concerné ici dans le contexte technique de l'invention.

Ainsi, pour la conception de la forme des miroirs et l'optimisation de leurs rayons de courbure, plusieurs solutions existent dans l'art antérieur qui vont être exposées ci-après.

Pour les centrales de type Fresnel, le champ de réflecteurs comporte plusieurs lignes de miroirs disposés côte à côte qui focalisent le rayonnement solaire sur le même récepteur. Chaque ligne de réflecteurs possède généralement des miroirs de forme fixe mais différente en fonction de leur distance par rapport au récepteur. En général, les miroirs sont cylindriques et leurs formes sont donc entièrement définies par leurs rayons de courbure. Chaque rayon est optimisé afin de renvoyer un maximum d'énergie sur le récepteur. En effet, de manière générale, plus les miroirs sont loin du récepteur et plus leur rayon de courbure optimum est grand.

Chacun des miroirs forme ainsi une tâche lumineuse sur le récepteur. Cette tâche peut par exemple être visualisée sur un écran blanc plan placé au niveau du récepteur. La largeur moyenne de la tâche obtenue est une caractéristique essentielle qui représente les performances du miroir concerné.

Malheureusement, pour un rayon de courbure donné d'un miroir, la largeur de la tâche obtenue sur le récepteur évolue au cours de la journée en fonction de la position du soleil et en particulier de l'angle du rayonnement solaire formé avec le plan horizontal.

L'optimisation du rayon de courbure consiste donc à trouver le rayon qui produit la tâche la moins large possible au moment où l'énergie solaire est la plus forte afin d'obtenir un compromis permettant de maximiser la production d'énergie. En général, l'optimisation se fait en considérant l'énergie annuelle en incluant le parcours du soleil sur tous les jours de l'année.

Etant donné que la largeur des tâches évolue, cela signifie qu'il existe des rayons de courbure optimums pour chaque position du soleil.

Aussi, pour maximiser le rendement, il faudrait avoir un rayon de courbure variable qui évolue en fonction de la position du soleil afin de maintenir la tâche la moins large possible tout au long de la journée.

Plusieurs solutions de réflecteur à rayon de courbure variable ont été proposées dans l'art antérieur.

Ainsi, la demande de brevet chinois CN 101576647 A décrit un principe de mise en forme et de réglage de la courbure d'un miroir. Le principe est de maintenir le miroir par au moins trois points de fixation réglables sur sa face arrière non réfléchissante, et de réaliser une mise en flexion du miroir à l'aide d'un bras de la structure qui maintient les trois points de fixation. Il suffit donc de jouer sur une des vis de réglage afin de déplacer le point de fixation correspondant et faire varier la courbure. Cette solution est présentée comme un moyen d'ajuster la courbure des miroirs lors de leur fabrication.

Sur un principe similaire, le modèle d'utilité chinois CN 203101710 U présente un réflecteur de type Fresnel avec une solution qui permet d'ajuster la courbure. Des vis permettent de mettre en flexion les barres de support supérieures afin d'ajuster la courbure du miroir.

En outre, la demande de brevet chinois CN 101457991 A propose un exemple de solution de miroir solaire de courbure variable. Le principe est le même que décrit précédemment, à savoir le maintien du miroir par au moins trois points de fixation réglables sur sa face arrière non réfléchissante, et la réalisation d'une mise en flexion du miroir à l'aide d'un bras de la structure qui maintient les points de fixation.

Les documents EP2561287 A1, DE102013225457 A1 et US4602853 A montrent réflecteurs solaires selon le préambule de la revendication 1.

Dans cet exemple, la courbure du miroir peut varier pendant le fonctionnement afin de l'optimiser en fonction de l'inclinaison et de l'incidence du soleil. Cette solution permet donc d'ajuster la forme du miroir afin que sa courbure soit toujours optimale en fonction de la position du soleil et ainsi optimiser le rendement optique.

### EXPOSÉ DE L'INVENTION

L'invention a pour but de remédier au moins partiellement aux besoins mentionnés ci-dessus et aux inconvénients relatifs aux réalisations de l'art antérieur.

En particulier, l'invention vise à concevoir un nouveau type de réflecteur solaire dont le ou les miroirs présentent un rayon de courbure variable qui évolue en fonction de la position du soleil de sorte à maximiser le rendement énergétique.

L'invention a ainsi pour objet, selon l'un de ses aspects, un réflecteur solaire, comportant :
- une pluralité de miroirs pour la réflexion solaire,
- une structure porteuse sur laquelle les miroirs sont disposés, la structure porteuse s'étendant selon un axe de rotation et étant mobile en rotation autour dudit axe de rotation de sorte à suivre la course du soleil,

caractérisé en ce que la structure porteuse comporte en outre :
   - une première surface réfléchissante s'étendant selon ledit axe de rotation sur laquelle est disposé au moins un premier miroir présentant un premier rayon de courbure,
   - une deuxième surface réfléchissante s'étendant selon ledit axe de rotation, différente de la première surface réfléchissante, sur laquelle est disposé au moins un deuxième miroir présentant un deuxième rayon de courbure, différent du premier rayon de courbure,
et en ce que la structure porteuse est mobile en rotation autour dudit axe de rotation pour présenter sélectivement le premier ou le deuxième miroir au rayonnement solaire.

Avantageusement, la structure porteuse peut être mobile en rotation autour dudit axe de rotation sur un angle d'au moins 180°, voire 225°, voire 270°, voire 315°, voire sensiblement 360°.

Le réflecteur solaire selon l'invention procure plusieurs avantages détaillés ci-après. Tout d'abord, le rendement optique du champ solaire peut être considérablement amélioré sans pour autant en augmenter les dimensions, à savoir l'emprise au sol. En particulier, un gain important, de l'ordre de 10 %, peut être obtenu en choisissant judicieusement les rayons de courbure à utiliser sur le réflecteur solaire afin de couvrir au mieux la plage des rayons de courbure optimums.

De plus, la solution de l'invention peut présenter un intérêt pour homogénéiser le flux au récepteur. En effet, les récepteurs comportent très souvent plusieurs tubes parallèles. Or, un problème fréquent est que les tubes du centre du récepteur chauffent plus vite que ceux des bords. Il y a donc parfois un intérêt d'avoir une tâche plus étalée au récepteur afin de chauffer les différents tubes de façon homogène quitte à réduire légèrement le rendement optique. Il est ainsi possible avec la solution de l'invention de choisir le rayon de courbure le plus adapté pour étaler plus ou moins la tâche sur le récepteur.

Le réflecteur solaire selon l'invention est d'autant plus intéressant que les champs de réflecteurs sont souvent surdimensionnés pour pouvoir travailler en pleine puissance, même si le soleil n'est pas à son maximum. Ainsi, quand le soleil est à son maximum, il est souvent nécessaire de défocaliser certaines lignes de réflecteurs pour réduire la puissance et éviter la surchauffe du récepteur. Au lieu de défocaliser, l'invention peut permettre de choisir des rayons de courbure moins bien adaptés. Cela permettrait de réduire la puissance tout en étalant la tâche et éviter d'avoir des tubes qui chauffent plus que les autres.

Par ailleurs, de la même manière, dans le cas d'essais de vieillissement sur des matériaux, il est nécessaire de maîtriser précisément le flux envoyé aux échantillons ainsi que l'homogénéité du flux sur la zone de travail. L'invention peut permettre de réguler facilement le niveau de flux en choisissant les rayons de courbure judicieusement. De même, elle peut permettre d'étaler la tâche et d'avoir un éclairement plus homogène sur la zone de travail.

La première surface réfléchissante peut comporter une pluralité de premiers miroirs disposés de façon adjacente les uns des autres, notamment au moins cinq, mieux au moins dix. De même, la deuxième surface réfléchissante peut comporter une pluralité de deuxièmes miroirs disposés de façon adjacente les uns des autres, notamment au moins cinq, mieux au moins dix.

La première surface réfléchissante peut être de forme incurvée concave selon le premier rayon de courbure. De même, la deuxième surface réfléchissante peut être de forme incurvée concave selon le deuxième rayon de courbure.

En outre, la structure porteuse peut s'étendre selon ledit axe de rotation entre deux surfaces d'extrémité opposées, chacune des deux surfaces d'extrémité comportant un support de rotation permettant la mise en rotation de la structure porteuse autour dudit axe de rotation, notamment par le biais de leur raccordement à des moyens de motorisation.

De plus, la structure porteuse peut comporter au moins un élément de référence, notamment situé sur au moins l'une des deux surfaces d'extrémités, orienté par rapport à l'axe optique des miroirs.

L'élément de référence peut être une surface de référence orientée précisément vis-à-vis de l'axe optique des miroirs, permettant notamment la mise en place d'un niveau ou inclinomètre pour permettre l'étalonnage angulaire de moyens de motorisation permettant l'orientation angulaire du réflecteur.

Par ailleurs, la structure porteuse peut présenter une forme cylindrique s'étendant selon ledit axe de rotation.

La structure porteuse peut présenter, en section transversale par rapport audit axe de rotation, une forme polygonale dont au moins les côtés au contact de miroirs sont concaves, notamment une forme triangulaire, rectangulaire ou carrée.

Selon un mode de réalisation, la structure porteuse peut présenter, en section transversale par rapport audit axe de rotation, une forme triangulaire avec trois côtés concaves, la structure porteuse comportant :
- une première surface réfléchissante s'étendant selon ledit axe de rotation sur laquelle est disposé au moins un premier miroir présentant un premier rayon de courbure,
- une deuxième surface réfléchissante s'étendant selon ledit axe de rotation, différente de la première surface réfléchissante, sur laquelle est disposé au moins un deuxième miroir présentant un deuxième rayon de courbure, différent du premier rayon de courbure,
- une troisième surface réfléchissante s'étendant selon ledit axe de rotation sur laquelle est disposé au moins un troisième miroir présentant un troisième rayon de courbure, différent du premier rayon de courbure et du deuxième rayon de courbure.

Selon un autre mode de réalisation, la structure porteuse peut présenter, en section transversale par rapport audit axe de rotation, une forme rectangulaire ou carrée avec au moins deux côtés opposés concaves, au contact de miroirs, la structure porteuse comportant :
- une première surface réfléchissante concave s'étendant selon ledit axe de rotation sur laquelle est disposé au moins un premier miroir présentant un premier rayon de courbure,
- une deuxième surface réfléchissante concave, opposée à la première surface réfléchissante, s'étendant selon ledit axe de rotation, sur laquelle est disposé au moins un deuxième miroir présentant un deuxième rayon de courbure, différent du premier rayon de courbure,
- une troisième surface non réfléchissante, dépourvue de miroirs, ou une troisième surface réfléchissante concave s'étendant selon ledit axe de rotation sur laquelle est disposé au moins un troisième miroir présentant un troisième rayon de courbure, différent du premier rayon de courbure et du deuxième rayon de courbure,
- une quatrième surface non réfléchissante, dépourvue de miroirs, ou une quatrième surface réfléchissante s'étendant selon ledit axe de rotation sur laquelle est disposé au moins un quatrième miroir présentant un quatrième rayon de courbure, différent du premier rayon de courbure, du deuxième rayon de courbure et du troisième rayon de courbure.

En outre, le réflecteur solaire peut être du type réflecteur à miroir de Fresnel linéaire ou réflecteur de centrale solaire à tour.

De plus, le premier rayon de courbure, le deuxième rayon de courbure, le troisième rayon de courbure et le quatrième rayon de courbure peuvent être compris entre 10 m et 30 m.

Par ailleurs, l'invention a aussi pour objet, selon un autre de ses aspects, une centrale solaire, caractérisée en ce qu'elle comporte une pluralité de réflecteurs solaires tels que définis précédemment.

La centrale solaire peut de plus comporter un récepteur fixe recevant le rayonnement solaire en provenance des réflecteurs solaires.

La centrale solaire peut en outre comporter des moyens de motorisation permettant l'entraînement en rotation des réflecteurs solaires.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
La figure 1 représente, selon une vue en perspective, un exemple de centrale solaire comportant une pluralité de réflecteurs solaires conformes à l'invention, seulement deux étant représentés,
La figure 2 représente, une vue isolée en perspective, d'un réflecteur solaire conforme à l'invention de la centrale solaire représentée sur la figure 1, et
La figure 3 et la figure 4 représentent, en perspective, des variantes de réalisation du réflecteur solaire de la figure 2.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans la description d'exemples de mise en œuvre de l'invention qui va suivre, le domaine d'application concerné est celui des centrales solaires thermodynamiques comprenant des réflecteurs solaires. De façon privilégiée, ces réflecteurs solaires sont choisis parmi ceux des collecteurs linéaires de Fresnel et des centrales à tour. En effet, ces types de réflecteurs sont avantageusement associés à des récepteurs fixes.

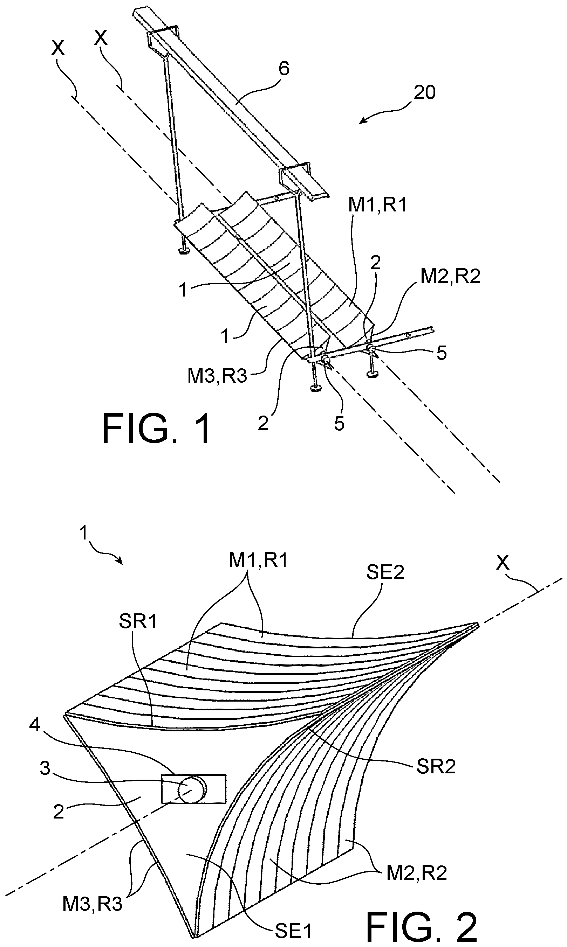

En référence à la figure 1, on a représenté selon une vue en perspective, un exemple de centrale solaire 20 comportant une pluralité de réflecteurs solaires 1 conformes à l'invention. Toutefois, sur cette figure 1, seuls deux réflecteurs solaires 1 sont représentés.

La centrale solaire 20 comporte un récepteur fixe 6 qui reçoit le rayonnement solaire en provenance des réflecteurs solaires 1. De plus, elle comporte des moyens de motorisation 5 permettant l'entraînement en rotation des réflecteurs solaires 1.

Chaque réflecteur solaire 1 comporte plusieurs jeux de miroirs M1, M2, M3 de rayons de courbure R1, R2, R3 différents mais fixes. Ainsi, en fonction de l'orientation du réflecteur solaire 1, il est possible de sélectionner le rayon de courbure R1, R2 ou R3 le plus intéressant à utiliser pour optimiser le rendement thermique.

Avantageusement, les moyens de motorisation 5 permettent de faire un tour complet autour de l'axe de rotation X, soit un angle de 360°, afin de pouvoir positionner chacun des jeux de miroirs dans la position de travail. Au contraire, dans l'art antérieur, une plage angulaire de 90° est généralement suffisante pour atteindre toutes les positions de travail avec des réflecteurs solaires classiques ne comprenant qu'un seul jeu de miroirs et un seul rayon de courbure.

La figure 2 représente, selon une vue en perspective, un premier exemple de réalisation d'un réflecteur solaire 1 conforme à l'invention, semblable à ceux de la centrale solaire 20 de la figure 1.

Ainsi, le réflecteur solaire 1 comporte une structure porteuse 2 de forme cylindrique selon son axe de rotation X et qui présente, en section transversale, une forme triangulaire avec trois côtés concaves.

Plus précisément, la structure porteuse 2 comporte une première surface réfléchissante SR1 s'étendant selon l'axe de rotation X sur laquelle est disposé une dizaine de premiers miroirs M1 présentant un premier rayon de courbure R1, par exemple égal à 12 m.

Elle comporte également une deuxième surface réfléchissante SR2 s'étendant selon l'axe de rotation X sur laquelle est disposé une dizaine de deuxièmes miroirs M2 présentant un deuxième rayon de courbure R2, différent du premier rayon de courbure R1, par exemple de l'ordre de 16 m.

Enfin, elle comporte une troisième surface réfléchissante SR3 s'étendant selon l'axe de rotation X sur laquelle est disposé une dizaine de troisièmes miroirs M3 présentant un troisième rayon de courbure R3, différent du premier rayon de courbure R1 et du deuxième rayon de courbure R2, par exemple de l'ordre de 21 m.

Les trois surfaces réfléchissantes SR1, SR2 et SR3 sont avantageusement identiques, à savoir de même forme et de mêmes dimensions.

La structure porteuse 2 est mobile de sorte à suivre la course du soleil, en particulier dans cet exemple sur un angle de 360° autour de l'axe de rotation X.

Par ailleurs, comme visible sur cette figure 2, la structure porteuse 2 s'étend selon l'axe de rotation X entre deux surfaces d'extrémité SE1 et SE2 opposées.

Chacune des deux surfaces d'extrémité SE1 et SE2 comporte un support de rotation 3, par exemple sous une forme cylindrique, permettant la mise en rotation de la structure porteuse 2 autour de l'axe de rotation X par le biais de leur raccordement aux moyens de motorisation 5.

En outre, la structure porteuse 2 comporte un élément de référence 4, situé sur la première surface d'extrémité SE1 sous la forme d'une surface de référence 4 orientée précisément vis-à-vis de l'axe optique des miroirs M1, M2, M3, et permettant la mise en place d'un niveau ou inclinomètre pour permettre l'étalonnage angulaire des moyens de motorisation 5.

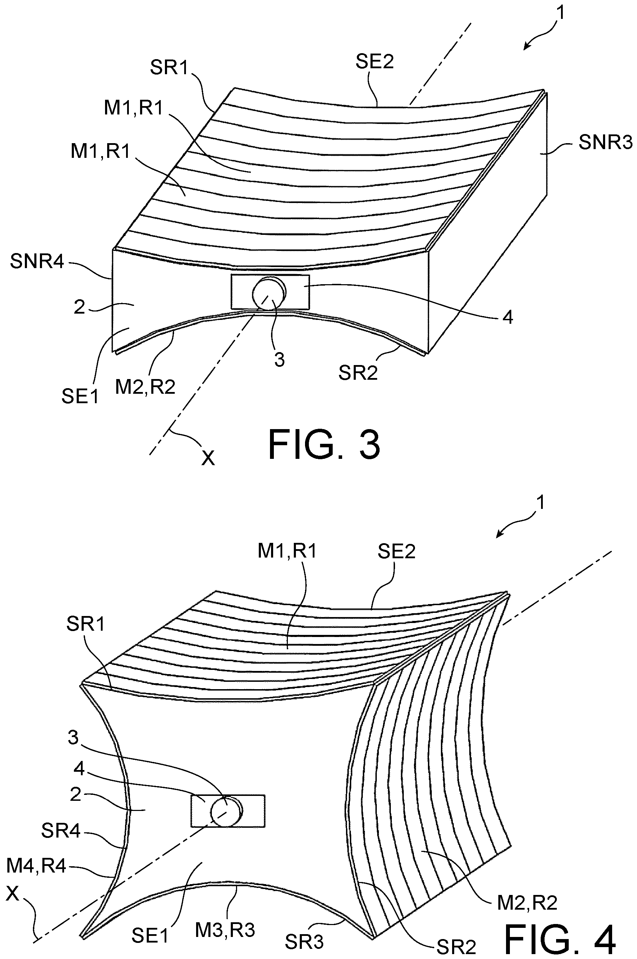

La figure 3 représente, selon une vue en perspective similaire à celle de la figure 2, un autre exemple de réflecteur solaire 1 conforme à l'invention.

A la différence de l'exemple de la figure 2, la structure porteuse 2 présente, en section transversale par rapport à l'axe de rotation X, une forme rectangulaire avec deux côtés opposés concaves, au contact de miroirs.

Plus précisément, elle comporte une première surface réfléchissante concave SR1 s'étendant selon l'axe de rotation X sur laquelle est disposé une dizaine de premiers miroirs M1 présentant un premier rayon de courbure R1.

Elle comporte encore une deuxième surface réfléchissante concave SR2, opposée à la première surface réfléchissante SR1, s'étendant selon l'axe de rotation X, et sur laquelle est disposé une dizaine de deuxièmes miroirs M2 présentant un deuxième rayon de courbure R2, différent du premier rayon de courbure R1.

Enfin, elle comporte une troisième surface non réfléchissante SNR3, dépourvue de miroirs, et une quatrième surface non réfléchissante SNR4, dépourvue de miroirs, opposées l'une à l'autre.

La figure 4 représente, toujours selon une vue en perspective similaire à celle de la figure 2, une autre variante de réalisation d'un réflecteur solaire 1 conforme à l'invention.

Dans cette variante, la structure porteuse 2 présente, en section transversale par rapport à l'axe de rotation X, une forme carrée avec quatre côtés concaves.

Plus précisément, elle comporte une première surface réfléchissante concave SR1 s'étendant selon l'axe de rotation X sur laquelle est disposé une dizaine de premiers miroirs M1 présentant un premier rayon de courbure R1.

Elle comporte aussi une deuxième surface réfléchissante concave SR2, opposée à la première surface réfléchissante SR1, s'étendant selon l'axe de rotation X, sur laquelle est disposé une dizaine de deuxièmes miroirs M2 présentant un deuxième rayon de courbure R2, différent du premier rayon de courbure R1.

Elle comporte également une troisième surface réfléchissante concave SR3 s'étendant selon l'axe de rotation X sur laquelle est disposé une dizaine de troisièmes miroirs M3 présentant un troisième rayon de courbure R3, différent du premier rayon de courbure R1 et du deuxième rayon de courbure R2.

Enfin, elle comporte une quatrième surface réfléchissante SR4 s'étendant selon l'axe de rotation X sur laquelle est disposé une dizaine de quatrièmes miroirs M4 présentant un quatrième rayon de courbure R4, différent du premier rayon de courbure R1, du deuxième rayon de courbure R2 et du troisième rayon de courbure R3.

Dans tous ces exemples de réalisation, la rotation autour de l'axe de rotation X sur un angle de 360° permet d'utiliser les miroirs M1, M2, M3 ou M4 présentant le meilleur rayon de courbure R1, R2, R3 ou R4 pour optimiser le rendement thermique. Il faut toutefois noter que l'angle pourrait être inférieur à 360°, étant préférentiellement supérieur à 180°.

## Revendications

1. Réflecteur solaire (1), comportant :
- une pluralité de miroirs (M1, M2, M3, M4) pour la réflexion d'un rayonnement solaire,
- une structure porteuse (2) sur laquelle les miroirs (M1, M2, M3, M4) sont disposés, la structure porteuse (2) s'étendant selon un axe de rotation (X) et étant mobile en rotation autour dudit axe de rotation (X) de sorte à suivre la course du soleil,
où la structure porteuse (2) comporte en outre :
- une première surface réfléchissante (SR1) s'étendant selon ledit axe de rotation (X) sur laquelle est disposé au moins un premier miroir (M1) présentant un premier rayon de courbure (R1),
- une deuxième surface réfléchissante (SR2) s'étendant selon ledit axe de rotation (X), différente de la première surface réfléchissante (SR1), sur laquelle est disposé au moins un deuxième miroir (M2) présentant un deuxième rayon de courbure (R2), différent du premier rayon de courbure (R1),
et **caractérisé en ce que** la structure porteuse (2) est mobile en rotation autour dudit axe de rotation (X) pour présenter sélectivement le premier ou le deuxième miroir au rayonnement solaire.

2. Réflecteur solaire selon la revendication 1, **caractérisé en ce que** la première surface réfléchissante (SR1) comporte une pluralité de premiers miroirs (M1) disposés de façon adjacente les uns des autres, notamment au moins cinq, mieux au moins dix, et/ou **en ce que** la deuxième surface réfléchissante (SR2) comporte une pluralité de deuxièmes miroirs (M2) disposés de façon adjacente les uns des autres, notamment au moins cinq, mieux au moins dix.

3. Réflecteur solaire selon la revendication 1 ou 2, **caractérisé en ce que** la première surface réfléchissante (SR1) est de forme incurvée concave selon le premier rayon de courbure (R1) et **en ce que** la deuxième surface réfléchissante (SR2) est de forme incurvée concave selon le deuxième rayon de courbure (R2).

4. Réflecteur solaire selon l'une des revendications précédentes, **caractérisé en ce que** le premier rayon de courbure (R1) et le deuxième rayon de courbure (R2) sont compris entre 10 m et 30 m.

5. Réflecteur solaire selon l'une quelconque des revendications précédentes, **caractérisé en ce que** la structure porteuse (2) s'étend selon ledit axe de rotation (X) entre deux surfaces d'extrémité (SE1, SE2) opposées, chacune des deux surfaces d'extrémité (SE1, SE2) comportant un support de rotation (3) permettant la mise en rotation de la structure porteuse (2) autour dudit axe de rotation (X), notamment par le biais de leur raccordement à des moyens de motorisation.

6. Réflecteur solaire selon l'une quelconque des revendications précédentes, **caractérisé en ce que** la structure porteuse (2) comporte au moins un élément de référence (4), notamment situé sur au moins l'une des deux surfaces d'extrémités (SE1, SE2), orienté par rapport à l'axe optique des miroirs (M1, M2, M3, M4).

7. Réflecteur solaire selon la revendication 6, **caractérisé en ce que** l'élément de référence (4) est une surface de référence (4) orientée précisément vis-à-vis de l'axe optique des miroirs (M1, M2, M3, M4), permettant notamment la mise en place d'un niveau ou inclinomètre pour permettre l'étalonnage angulaire de moyens de motorisation permettant l'orientation angulaire du réflecteur.

8. Réflecteur solaire selon l'une quelconque des revendications précédentes, **caractérisé en ce que** la structure porteuse (2) présente une forme cylindrique s'étendant selon ledit axe de rotation (X).

9. Réflecteur solaire selon la revendication 8, **caractérisé en ce que** la structure porteuse (2) présente, en section transversale par rapport audit axe de rotation (X), une forme polygonale dont au moins les côtés au contact de miroirs (M1, M2, M3, M4) sont concaves, notamment une forme triangulaire, rectangulaire ou carrée.

10. Réflecteur solaire la revendication 9, **caractérisé en ce que** la structure porteuse (2) présente, en section transversale par rapport audit axe de rotation (X), une forme triangulaire avec trois côtés concaves, la structure porteuse (2) comportant :
- une première surface réfléchissante (SR1) s'étendant selon ledit axe de rotation (X) sur laquelle est disposé au moins un premier miroir (M1) présentant un premier rayon de courbure (R1),
- une deuxième surface réfléchissante (SR2) s'étendant selon ledit axe de rotation (X), différente de la première surface réfléchissante (SR1), sur laquelle est disposé au moins un deuxième miroir (M2) présentant un deuxième rayon de courbure (R2), différent du premier rayon de courbure (R1),
- une troisième surface réfléchissante (SR3) s'étendant selon ledit axe de rotation (X) sur laquelle est disposé au moins un troisième miroir (M3) présentant un troisième rayon de courbure (R3), différent du premier rayon de courbure (R1) et du deuxième rayon de courbure (R2).

11. Réflecteur solaire la revendication 9, **caractérisé en ce que** la structure porteuse (2) présente, en section transversale par rapport audit axe de rotation (X), une forme rectangulaire ou carrée avec au moins deux côtés opposés concaves, au contact de miroirs, la structure porteuse (2) comportant :
- une première surface réfléchissante concave (SR1) s'étendant selon ledit axe de rotation (X) sur laquelle est disposé au moins un premier miroir (M1) présentant un premier rayon de courbure (R1),
- une deuxième surface réfléchissante concave (SR2), opposée à la première surface réfléchissante (SR1), s'étendant selon ledit axe de rotation (X), sur laquelle est disposé au moins un deuxième miroir (M2) présentant un deuxième rayon de courbure (R2), différent du premier rayon de courbure (R1),
- une troisième surface non réfléchissante (SNR3), dépourvue de miroirs, ou une troisième surface réfléchissante concave (SR3) s'étendant selon ledit axe de rotation (X) sur laquelle est disposé au moins un troisième miroir (M3) présentant un troisième rayon de courbure (R3), différent du premier rayon de courbure (R1) et du deuxième rayon de courbure (R2),
- une quatrième surface non réfléchissante (SNR4), dépourvue de miroirs, ou une quatrième surface réfléchissante (SR4) s'étendant selon ledit axe de rotation (X) sur laquelle est disposé au moins un quatrième miroir (M4) présentant un quatrième rayon de courbure (R4), différent du premier rayon de courbure (R1), du deuxième rayon de courbure (R2) et du troisième rayon de courbure (R3).

12. Réflecteur solaire selon l'une quelconque des revendications précédentes, **caractérisé en ce qu'**il est du type réflecteur à miroir de Fresnel linéaire ou réflecteur de centrale solaire à tour.

13. Centrale solaire (20), **caractérisée en ce qu'**elle comporte une pluralité de réflecteurs solaires (1) selon l'une quelconque des revendications précédentes.

14. Centrale solaire selon la revendication 13, **caractérisée en ce qu'**elle comporte un récepteur fixe (6) recevant le rayonnement solaire en provenance des réflecteurs solaires (1).

15. Centrale solaire selon la revendication 13 ou 14, **caractérisée en ce qu'**elle comporte des moyens de motorisation (5) permettant l'entraînement en rotation des réflecteurs solaires (1).

## Patentansprüche

1. Solarreflektor (1), der Folgendes umfasst:
- eine Vielzahl von Spiegeln (M1, M2, M3, M4) zur Reflexion einer Sonnenstrahlung,
- eine Trägerstruktur (2), auf der die Spiegel (M1, M2, M3, M4) angeordnet sind, wobei sich die Trägerstruktur (2) entlang einer Drehachse (X) erstreckt und um die Drehachse (X) drehbeweglich ist, so dass sie dem Sonnenverlauf folgt, wobei die Trägerstruktur (2) ferner Folgendes umfasst:
- eine erste reflektierende Fläche (SR1), die sich entlang der Drehachse (X) erstreckt und auf der mindestens ein erster Spiegel (M1) angeordnet ist, der einen ersten Krümmungsradius (R1) aufweist,
- eine zweite reflektierende Fläche (SR2), die sich entlang der Drehachse (X) erstreckt, sich von der ersten reflektierenden Fläche (SR1) unterscheidet und auf der mindestens ein zweiter Spiegel (M2) angeordnet ist, der einen zweiten Krümmungsradius (R2) aufweist, der sich vom ersten Krümmungsradius (R1) unterscheidet, und **gekennzeichnet dadurch,**
**dass** die Trägerstruktur (2) um die Drehachse (X) drehbeweglich ist, um den ersten oder zweiten Spiegel selektiv der Sonnenstrahlung auszusetzen.

2. Solarreflektor nach Anspruch 1, **dadurch gekennzeichnet, dass** die erste reflektierende Fläche (SR1) eine Vielzahl von ersten Spiegeln (M1), die nebeneinander angeordnet sind, insbesondere mindestens fünf, besser mindestens zehn umfasst und/oder dass die zweite reflektierende Fläche (SR2) eine Vielzahl von zweiten Spiegeln (M2), die nebeneinander angeordnet sind, insbesondere mindestens fünf, besser mindestens zehn umfasst.

3. Solarreflektor nach Anspruch 1 oder 2, **dadurch gekennzeichnet, dass** die erste reflektierende Fläche (SR1) gemäß dem ersten Krümmungsradius (R1) konkav gekrümmt ist und dass die zweite reflektierende Fläche (SR2) gemäß dem zweiten Krümmungsradius (R2) konkav gekrümmt ist.

4. Solarreflektor nach einem der vorhergehenden Ansprüche, **dadurch gekennzeichnet, dass** der erste Krümmungsradius (R1) und der zweite Krümmungsradius (R2) zwischen 10 m und 30 m liegen.

5. Solarreflektor nach einem der vorhergehenden Ansprüche, **dadurch gekennzeichnet, dass** sich die Trägerstruktur (2) entlang der Drehachse (X) zwischen zwei gegenüberliegenden Endflächen (SE1, SE2) erstreckt, wobei jede der beiden Endflächen (SE1, SE2) ein Drehlager (3) umfasst, das die Drehung der Trägerstruktur (2) um die Drehachse (X), insbesondere durch ihren Anschluss an Motorisierungsmittel, ermöglicht.

6. Solarreflektor nach einem der vorhergehenden Ansprüche, **dadurch gekennzeichnet, dass** die Trägerstruktur (2) mindestens ein Referenzelement (4) umfasst, das sich insbesondere an mindestens einer der beiden Endflächen (SE1, SE2) befindet und im Verhältnis zur optischen Achse der Spiegel (M1, M2, M3, M4) ausgerichtet ist.

7. Solarreflektor nach Anspruch 6, **dadurch gekennzeichnet, dass** das Referenzelement (4) eine Referenzfläche (4) ist, die genau in Bezug auf die optische Achse der Spiegel (M1, M2, M3, M4) ausgerichtet ist, wodurch insbesondere eine Wasserwaage oder ein Neigungsmesser angebracht werden kann, um die Winkelkalibrierung von Motorisierungsmitteln zu ermöglichen, die die Winkelausrichtung des Reflektors ermöglichen.

8. Solarreflektor nach einem der vorhergehenden Ansprüche, **dadurch gekennzeichnet, dass** die Trägerstruktur (2) eine sich entlang der Drehachse (X) erstreckende zylindrische Form aufweist.

9. Solarreflektor nach Anspruch 8, **dadurch gekennzeichnet, dass** die Trägerstruktur (2) im Querschnitt im Verhältnis zur Drehachse (X) eine polygonale Form aufweist, bei der mindestens die Seiten, die mit den Spiegeln (M1, M2, M3, M4) in Kontakt stehen, konkav sind, insbesondere eine dreieckige, rechteckige oder quadratische Form.

10. Solarreflektor nach Anspruch 9, **dadurch gekennzeichnet, dass** die Trägerstruktur (2) im Querschnitt im Verhältnis zur Drehachse (X), eine dreieckige Form mit drei konkaven Seiten aufweist, wobei die Trägerstruktur (2) Folgendes umfasst:
- eine erste reflektierende Fläche (SR1), die sich entlang der Drehachse (X) erstreckt und auf der mindestens ein erster Spiegel (M1) angeordnet ist, der einen ersten Krümmungsradius (R1) aufweist,
- eine zweite reflektierende Fläche (SR2), die sich entlang der Drehachse (X) erstreckt, sich von der ersten reflektierenden Fläche (SR1) unterscheidet und auf der mindestens ein zweiter Spiegel (M2) angeordnet ist, der einen zweiten Krümmungsradius (R2) aufweist, der sich vom ersten Krümmungsradius (R1) unterscheidet,
- eine dritte reflektierende Fläche (SR3), die sich entlang der Drehachse (X) erstreckt und auf der mindestens ein dritter Spiegel (M3) angeordnet ist, der einen dritten Krümmungsradius (R3) aufweist, der sich vom ersten Krümmungsradius (R1) und vom zweiten Krümmungsradius (R2) unterscheidet.

11. Solarreflektor nach Anspruch 9, **dadurch gekennzeichnet, dass** die Trägerstruktur (2) im Querschnitt im Verhältnis zur Drehachse (X), eine rechteckige oder quadratische Form mit mindestens zwei gegenüberliegenden konkaven Seiten, die mit Spiegeln in Kontakt stehen, aufweist, wobei die Trägerstruktur (2) Folgendes umfasst:
- eine erste konkave reflektierende Fläche (SR1), die sich entlang der Drehachse (X) erstreckt und auf der mindestens ein erster Spiegel (M1) angeordnet ist, der einen ersten Krümmungsradius (R1) aufweist,
- eine zweite konkave reflektierende Fläche (SR2), die der ersten reflektierenden Fläche (SR1) gegenüberliegt, sich entlang der Drehachse (X) erstreckt und auf der mindestens ein zweiter Spiegel (M2) angeordnet ist, der einen zweiten Krümmungsradius (R2) aufweist, der sich vom ersten Krümmungsradius (R1) unterscheidet,
- eine dritte nicht reflektierende Fläche (SNR3), die ohne Spiegel ist, oder eine dritte konkave reflektierende Fläche (SR3), die sich entlang der Drehachse (X) erstreckt und auf der mindestens ein dritter Spiegel (M3) angeordnet ist, der einen dritten Krümmungsradius (R3) aufweist, der sich vom ersten Krümmungsradius (R1) und vom zweiten Krümmungsradius (R2) unterscheidet,
- eine vierte nicht reflektierende Fläche (SNR4), die ohne Spiegel ist, oder eine vierte reflektierende Fläche (SR4), die sich entlang der Drehachse (X) erstreckt und auf der mindestens ein vierter Spiegel (M4) angeordnet ist, der einen vierten Krümmungsradius (R4) aufweist, der sich vom ersten Krümmungsradius (R1), vom zweiten Krümmungsradius (R2) und vom dritten Krümmungsradius (R3) unterscheidet.

12. Solarreflektor nach einem der vorhergehenden Ansprüche, **dadurch gekennzeichnet, dass** er vom Typ linearer Fresnel-Spiegelreflektor oder Reflektor für Solarturmkraftwerke ist.

13. Solarkraftwerk (20), **dadurch gekennzeichnet, dass** es eine Vielzahl von Solarreflektoren (1) nach einem der vorhergehenden Ansprüche umfasst.

14. Solarkraftwerk nach Anspruch 13, **dadurch gekennzeichnet, dass** es einen festen Empfänger (6) umfasst, der die von den Solarreflektoren (1) kommende Sonnenstrahlung empfängt.

15. Solarkraftwerk nach Anspruch 13 oder 14, **dadurch gekennzeichnet, dass** es Motorisierungsmittel (5) umfasst, die den Drehantrieb der Solarreflektoren (1) ermöglichen.

## Claims

1. A solar reflector (1), comprising:
- a plurality of mirrors (M1, M2, M3, M4) for reflecting solar radiation,
- a support structure (2) on which the mirrors (M1, M2, M3, M4) are disposed, the support structure (2) extending along an axis of rotation (X) and being movable in rotation about said axis of rotation (X) so as to follow the travel of the sun, wherein the supporting structure (2) furthermore includes:
- a first reflective surface (SR1) extending along said axis of rotation (X) on which at least one first mirror (M1) having a first radius of curvature (R1) is disposed,
- a second reflective surface (SR2) extending along said axis of rotation (X), different from the first reflective surface (SR1), on which at least one second mirror (M2) is disposed having a second radius of curvature (R2), different from the first radius of curvature (R1), and **characterized**
**in that** the support structure (2) is movable in rotation about said axis of rotation (X) to selectively present the first or second mirror to solar radiation.

2. Solar reflector according to claim 1, **characterized in that** the first reflective surface (SR1) comprises a plurality of first mirrors (M1) arranged adjacent to one another, in particular at least five, better at least ten, and/or **in that** the second reflective surface (SR2) comprises a plurality of second mirrors (M2) arranged adjacent to one another, in particular at least five, better at least ten.

3. Solar reflector according to claim 1 or 2, **characterized in that** the first reflective surface (SR1) is of concave curved shape according to the first radius of curvature (R1) and **in that** the second reflective surface (SR2) is of concave curved shape according to the second radius of curvature (R2).

4. Solar reflector according to one of the preceding claims, **characterized in that** the first radius of curvature (R1) and the second radius of curvature (R2) are between 10 m and 30 m.

5. Solar reflector according to any one of the preceding claims, **characterized in that** the support structure (2) extends along said axis of rotation (X) between two opposing end surfaces (SE1, SE2), each of the two end surfaces (SE1, SE2) comprising a rotation support (3) allowing the support structure (2) to be rotated about said axis of rotation (X), in particular by connecting them to motorization means.

6. Solar reflector according to any one of the preceding claims, **characterized in that** the support structure (2) includes at least one reference element (4), in particular located on at least one of the two end surfaces (SE1, SE2), oriented with respect to the optical axis of the mirrors (M1, M2, M3, M4).

7. Solar reflector according to claim 6, **characterized in that** the reference element (4) is a reference surface (4) oriented precisely with respect to the optical axis of the mirrors (M1, M2, M3, M4), allowing in particular the installation of a level or inclinometer to enable the angular calibration of motorization means allowing the angular orientation of the reflector.

8. Solar reflector according to any one of the preceding claims, **characterized in that** the support structure (2) has a cylindrical shape extending along said axis of rotation (X).

9. Solar reflector according to claim 8, **characterized in that** the support structure (2) has, in cross-section with respect to said axis of rotation (X), a polygonal shape of which at least the sides in contact with mirrors (M1, M2, M3, M4) are concave, in particular a triangular, rectangular or square shape.

10. Solar reflector according to claim 9, **characterized in that** the support structure (2) has, in cross-section with respect to said axis of rotation (X), a triangular shape with three concave sides, the support structure (2) comprising:
- a first reflective surface (SR1) extending along said axis of rotation (X) on which at least one first mirror (M1) having a first radius of curvature (R1) is disposed,
- a second reflective surface (SR2) extending along said axis of rotation (X), different from the first reflective surface (SR1), on which at least one second mirror (M2) is disposed having a second radius of curvature (R2), different from the first radius of curvature (R1),
- a third reflective surface (SR3) extending along said axis of rotation (X) on which at least one third mirror (M3) is disposed having a third radius of curvature (R3), different from the first radius of curvature (R1) and the second radius of curvature (R2).

11. Solar reflector according to claim 9, **characterized in that** the support structure (2) has, in cross-section with respect to said axis of rotation (X), a rectangular or square shape with at least two concave opposite sides, in contact with mirrors, the support structure (2) including:
- a first concave reflective surface (SR1) extending along said axis of rotation (X) on which at least one first mirror (M1) having a first radius of curvature (R1) is disposed,
- a second concave reflective surface (SR2), opposite the first reflective surface (SR1), extending along said axis of rotation (X), on which at least one second mirror (M2) having a second radius of curvature (R2), different from the first radius of curvature (R1), is disposed,
- a third non-reflective surface (SNR3), devoid of mirrors, or a third concave reflective surface (SR3) extending along said axis of rotation (X) on which at least one third mirror (M3) having a third radius of curvature (R3), different from the first radius of curvature (R1) and the second radius of curvature (R2), is disposed,
- a fourth non-reflective surface (SNR4), devoid of mirrors, or a fourth reflective surface (SR4) extending along said axis of rotation (X) on which is disposed at least one fourth mirror (M4) having a fourth radius of curvature (R4), different from the first radius of curvature (R1), the second radius of curvature (R2) and the third radius of curvature (R3).

12. Solar reflector according to any one of the preceding claims, **characterized in that** it is of the linear Fresnel mirror reflector or tower solar power plant reflector type.

13. Solar power plant (20), **characterized in that** it comprises a plurality of solar reflectors (1) according to any one of the preceding claims.

14. Solar power plant according to claim 13, **characterized in that** it includes a fixed receiver (6) receiving the solar radiation from the solar reflectors (1).

15. Solar power plant according to claim 13 or 14, **characterized in that** it includes motorization means (5) enabling the solar reflectors (1) to be driven in rotation.
